# EUROPEAN PATENT SPECIFICATION

(11) **EP 2 930 017 B1**
(45) Date of publication and mention of the grant of the patent: **20.11.2019**
(21) Application number: 14792367.6
(22) Date of filing: 15.07.2014
(51) Int. Cl.: B32B 15/08, B32B 15/16, B32B 15/20, B32B 27/20, B32B 3/30

(54) **COMPOSITE OF METAL ALLOY AND CERAMIC RESIN AND METHOD FOR PREPARING SAME**
VERBUNDSTOFF AUS METALLLEGIERUNG UND KERAMIKHARZ SOWIE VERFAHREN ZUR HERSTELLUNG DAVON
ALLIAGE COMPOSITE DE MÉTAL ET DE RÉSINE DE CÉRAMIQUE ET SON PROCÉDÉ DE FABRICATION

(30) Priority: 16.07.2013 KR 20130083747
(43) Date of publication of application: 14.10.2015
(73) Proprietor: Il Kwang Polymer Co., Ltd., Goyang-si, Gyeonggi-do 410-704 (KR)
(72) Inventor: LEE, Eun Kyung, Goyang-si Gyeonggi-do 411-737 (KR); CHO, Yong Wan, Jeonju-si Jeollabuk-do 561-870 (KR)
(74) Representative: dompatent von Kreisler Selting Werner - Partnerschaft von Patent- und Rechtsanwälten mbB
(86) International application number: PCT/KR2014/006357
(87) International publication number: WO 2015/009010

(56) References cited:
- EP-A1- 0 987 719
- EP-A1- 2 103 406
- WO-A1-96/41508
- JP-A- 2002 309 387
- JP-A- 2003 337 495
- JP-A- 2006 001 216
- KR-A- 20090 055 052
- KR-A- 20110 133 119
- KR-A- 20120 132 848
- US-A1- 2011 114 368
- Mitutoyo: "QUICK GUIDE TO SURFACE ROUGHNESS MEASUREMENT Reference guide for laboratory and workshop", , 23 January 2017 (2017-01-23), XP055362128, Retrieved from the Internet: URL:http://www.mitutoyo.com/wp-content/upl oads/2012/11/1984_Surf_Roughness_PG.pdf [retrieved on 2017-04-05]
- Anonymous: "Surface roughness - Wikipedia, the free encyclopedia", , 5 November 2013 (2013-11-05), XP055174457, Retrieved from the Internet: URL:http://en.wikipedia.org/w/index.php?ti tle=Surface_roughness&oldid=580299120 [retrieved on 2015-03-06]
- Euro Inox: "roughness measurement", , 24 December 2014 (2014-12-24), XP055362154, Retrieved from the Internet: URL:http://www.worldstainless.org/Files/is sf/non-image-files/PDF/Euro_Inox/Roughness Measurement_EN.pdf [retrieved on 2017-04-05]

## Description

### Technical Field

The present invention relates to a metal alloy-and-ceramic resin composite and a method of manufacturing the same, and more particularly, to a metal alloy-and-ceramic resin composite which is formed by integrating a ceramic resin having a heat dissipating function and a metal alloy and is capable of providing a composite structure which can be used in various electronic devices, home appliances, medical devices, vehicle structure components, vehicle-mounted components, building material components, and other structure components, and exterior components, as well as LED lighting apparatuses, and a method of manufacturing the same.

### Background Art

Conventionally, a heterogeneous material integral-molding technology of integrating a so-called super-engineering resin-based compound, for example, a general engineering resin, such as a polybutylene terephthalate (PBT) resin, or a super-engineering resin, such as a polyphenylene sulfide (PPS) resin, to, for example, a molded aluminum alloy article or a molded stainless steel article using an insert molding technology, or a heterogeneous material integral-molding technology of integrating a magnesium alloy and a nylon (PA) resin, or a heterogeneous material integral-molding technology of integrating a thermoset plastic elastomer, such as a liquid fluorine-based elastomer or a silicon rubber and a stainless steel, aluminum, or a polycarbonate (PC) resin, have been widely known and generally used. In addition, these integral molding technologies are used in various fields. Molded composite articles of heterogeneous materials are used as housings of various electronic products, such as a notebook computer, a projector, a portable phone, or a game machine, housings and components of various home appliances such as a liquid crystal display (LCD) TV, a plasma TV, or a parabola antenna, or various components related to a vehicle.

It is understood that insert molding technologies have been used in various fields as described above due to the fact that properties of used materials may be properly combined. For example, functions related to, for example, a decorative feature and a mechanical strength feature may be implemented by a molded metal alloy article and functions related to securing, for example, a thermal and electrical insulation property or a light weight property which cannot be obtained through a metal material may be implemented using various engineering resins or thermoset elastomers.

Heterogeneous material integral-molding technologies of integrating heterogeneous materials, such as a metal alloy and a resin are disclosed in various Korean patent documents, for example, Korean Patent Laid-Open Publication No. 10-2012-0132848 (published on December 10, 2012), Korean Patent Laid-Open Publication No. 10-2011-0133119 (published on December 12, 2011), and Korean Patent Laid-Open Publication No. 10-2009-0055052 (published on June 2, 2009). Other composites are described in US2011/114368, WO9641508, EP0987719, EP2103406.

Although technologies of integrating a metal alloy and a resin have been variously described as described above, a technology of integrating a resin having a heat dissipating property, for example, a resin containing a ceramic, and a metal alloy has not been proposed. That is, recently, various resin compositions which are improved in a heat dissipating property without being degraded in mechanical and electrical properties have been developed as materials which may be used when manufacturing electronic devices including a heat dissipating structure including an LED lighting. However, because a technology of integrating such resins having the heat dissipating function and a metal alloy has not been proposed, it is difficult to apply the resins to various fields.

### Detailed Description of the Invention

### Technical Problem

An object of the present invention is to provide a composite structure which is formed by integrating a ceramic resin having a heat dissipating function and a metal alloy and may be used in various electronic devices, home appliances, medical devices, vehicle structure components, vehicle-mounted components, building material components, and other structure components, and exterior components, as well as in LED lighting apparatuses.

### Technical Solution

In order to achieve the above-described object, the present invention provides a metal alloy-and-ceramic resin composite including: a metal alloy, in which recess and protrusion undercuts are formed to provide an average surface roughness Rms of 80 µm to 150 µm by degreasing a surface thereof using a surfactant, and etching the degreased surface using an aqueous solution of at least one acid selected from hydrochloric acid, sulfuric acid, nitric acid, and formic acid; and a ceramic resin including 31 wt% to 79 wt% of at least one resin selected from polypropylene, polyamide, polyphenylene sulfide, polyacetylene, polycarbonate, polyester, and polyphenylene oxide, 20 wt% to 60 wt% of silicon carbide, and 1 wt% to 3 wt% of an additive, with reference to a total 100 wt parts of the resin. The ceramic resin is integrated on the surface of the metal alloy which is formed with the recess and protrusion undercuts, through injection molding.

The silicon carbide may be used in a form of powder having a size of 1 nm to 10 nm.

The additive may include 25 wt% to 35 wt% of an inorganic filler, 35 wt% to 40 wt% of a dispersing agent, and 30 wt% to 35 wt% a curing agent, with reference to a total 100 wt parts of the additive.

The metal alloy is selected from an aluminum alloy, a magnesium alloy, and a stainless steel alloy.

In order to achieve the above-described object, the present invention provides a method of manufacturing a metal alloy-and-ceramic resin composite. The method includes a) a degreasing step of removing an oil component from a surface of a metal alloy using a surfactant; b) an undercut forming step of removing an oxide film from the degreased surface of the metal alloy, and forming recess and protrusion undercuts to provide an average surface roughness Rms of 80 µm to 150 µm by etching the surface of the metal alloy, from which the oxide film is removed, using an aqueous solution of at least one acid selected from hydrochloric acid, sulfuric acid, nitric acid, and formic acid; c) a ceramic resin manufacturing step of manufacturing a ceramic resin including a resin and silicon carbide; and d) a bonding step of introducing the metal alloy, of which the surface is formed with the undercuts through the undercut forming step, into an injection molding mold, and then injection molding and bonding the ceramic resin manufactured in the ceramic resin manufacturing step on the surface of the metal alloy.

Through the ceramic resin manufacturing step (step d), it is possible to obtain a ceramic resin including 31 wt% to 79 wt% of at least one resin selected from polypropylene, polyamide, polyphenylene sulfide, polyacetylene, polycarbonate, polyester, and polyphenylene oxide, 20 wt% to 60 wt% of silicon carbide, and 1 wt% to 3 wt% of an additive, with reference to a total 100 wt parts of the resin.

The additive may include 25 wt% to 35 wt% of an inorganic filler, 35 wt% to 40 wt% of a dispersing agent, and 30 wt% to 35 wt% a curing agent, with reference to a total 100 wt parts of the additive.

The metal alloy is an alloy selected from an aluminum alloy, a magnesium alloy, and a stainless steel alloy.

The silicon carbide may be used in a form of powder having a size of 1 nm to 10 nm.

### Advantageous Effects

According to the present invention, because the ceramic resin having a heat dissipating function and a metal alloy are integrated with each other, it is possible to provide a metal alloy-and-ceramic resin composite which may be used in various electronic devices, home appliances, medical devices, vehicle structure components, vehicle-mounted components, building material components, and other structure components, and exterior components, as well as in LED lighting apparatuses.

In addition, because the ceramic resin may be rapidly contracted and expanded like a metal, it is possible to prevent the attachment strength from decreasing due to a difference in expansion rates when the ceramic resin is bonded to the metal alloy.

In addition, when being integrated with the metal alloy through the injection molding, the ceramic resin dissipates heat. Thus, rapid cooling can be achieved and thus an injection molding speed can be improved.

Further, because the ceramic resin having the heat dissipating function can be bonded to and integrated with the metal alloy, it is possible to manufacture various kinds of heat dissipation structures improved in heat dissipating property without being degraded in mechanical and electrical properties and elements of electronic devices having the heat dissipating function.

### Brief Description of the Drawings

FIG. 1 is a schematic flow chart illustrating a manufacturing method of a metal alloy-and-ceramic resin composite;
FIGs. 2a and 2b are photographs obtained by photographing a surface of a ceramic resin according to the present invention in an enlarged scale; and
FIGs. 3a and 3b are photographs obtained by photographing a bonding surface of a ceramic resin and a metal alloy according to the present invention in an enlarged scale.

### Description of Symbols of Main Parts of Drawings

S1: Degreasing step
S2: Oxide removing step
S3: Undercut forming step
S4: Ceramic resin manufacturing step
S5: Bonding step

### Mode for Carrying Out the Invention

Hereinafter, exemplary embodiments of the present invention will be described in detail with reference to accompanying drawings. In the description of the present invention, the description of the well-known function or structure will be omitted in order to clear the subject matter of the present invention.

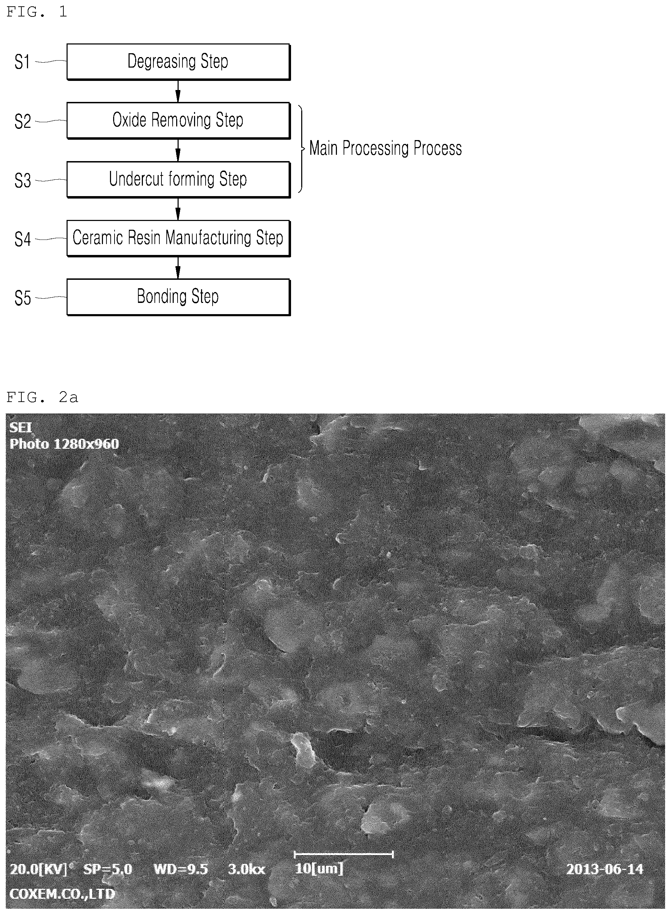

Among the accompanying drawings, FIG. 1 is a schematic flow chart illustrating a manufacturing method of a metal alloy-and-ceramic resin composite.

With reference to FIG. 1, a metal alloy-and-ceramic resin composite and a method of manufacturing the same will be described.

The metal alloy-and-ceramic resin composite is formed when a resin which contains silicon carbide (SiC) as a main component is integrally bonded to a metal alloy which is selected from an aluminum alloy, a magnesium alloy and a stainless steel alloy, through injection molding. This will be described in more detail below.

### [Metal Alloy]

A metal alloy used in an exemplary embodiment is an aluminum alloy. Aluminum alloys are generally classified into a malleable alloy and an aluminum alloy for casting. Meanwhile, the alloys may also be generally classified into a non-heat-treatment type alloy which may have an increased hardness or a tensile strength only by work hardening, and a heat-treatment type alloy which may have an improved mechanical property by a heat-treatment. Aluminum alloys belonging to the non-heat-treatment type alloy include, for example, an Al-Mg based alloy, an Al-Mn based alloy, and an Al-Mg-Mn based alloy. Aluminum alloys belonging to the heat-treatment type alloy include, for example, an Al-Cu-Mg based alloy, an Al-Zn-Mg based alloy, an Al-Mg-Si based alloy, and a heat resisting aluminum. Alloys for casting are classified into an alloy for metal mold casting, an alloy for sand molding, an alloy for shell casting, and an alloy for die casting.

Various known aluminum alloys may be applied to an exemplary embodiment of the present invention, and are standardized by Korean Industrial Standards (KS).

In addition, an aluminum alloy applied to an exemplary embodiment is obtained from an intermediate aluminum alloy material of an extrusion or the like having a plate shape, a rod shape, or a pipe shape as a material shape before working, in which the extrusion is worked to a component structure through working, such as shearing, cutting, or drawing, or machining, such as milling, electric discharge machining, pressing, grinding, or polishing.

Accordingly, when the component structure is introduced into an injection molding die so as to process the component structure and manufacture a component having a shape and structure required for a specific product.

### [Pretreating Step]

A component made of an aluminum alloy worked to have a required shape and structure shall not have a thick film of, for example, an oxidation or a hydroxide, formed on a surface to be bonded, and when it is evident that rust exists on the surface since the component has been left in a natural state for a long period, the rust shall be removed from the surface through, for example, polishing or blasting. Pollutants other than the rust, for example, an oil film adhered to the surface during a metal working process or finger oil component adhered to the surface while the component is carried, shall be removed through a degreasing step as follows.

That is, for example, processing oil, finger oil component, or metal debris may be adhered to the surface of the aluminum alloy component and fine oil droplets or dirt may be adhered even after processing through, for example, sand blasting, and they shall be degreased or cleaned. In general, the worked aluminum alloy component is processed by being introduced into a known solvent greasing machine for degreasing. When adhesion of oil components is not serious, a degreasing treatment is initially performed in which the aluminum alloy component is immersed in an aqueous solution of a commercially available degreasing agent for an aluminum alloy for several minutes and cleansed. In addition, in order to chemically remove the surface to expose a clean aluminum alloy surface, a bath of a diluted sodium hydroxide aqueous solution is prepared at a several % concentration at a temperature of about 40°C and the aluminum alloy component is immersed in the sodium hydroxide aqueous solution bath.

Further, another bath of an acidic aqueous solution, such as a hydrochloric acid aqueous solution, a nitric acid aqueous solution, or an ammonium hydrogen fluoride aqueous solution, is prepared at a several % concentration and at a temperature of about 40°C. The used acidic liquid is varied depending on a kind of aluminum alloy. However, when various kinds of solutions as described above are prepared in advance, it is possible to cope with different aluminum alloys. After being immersed in the sodium hydroxide aqueous solution and cleansed, the aluminum alloy component is immersed in the above-described acidic aqueous solution and cleansed, and then the pretreating step is finished.

As still another example, the oil components bonded to the aluminum alloy may be removed using a surfactant.

### [Undercut Formation Step]

The metal alloy (aluminum alloy) degreased by the above-described pretreating step is etched using an acidic aqueous solution of at least one acid selected from hydrochloric acid, sulfuric acid, nitric acid, and formic acid to form recess and protrusion undercuts having an average surface roughness of 80 - 150 µm. That is, after finishing the pretreating step, etching is performed by immersing the aluminum alloy in the acidic aqueous solution so as to form very fine unevenness on the surface of the aluminum alloy.

For example, the metal alloy is immersed in an aqueous mixture prepared by mixing, for example, a sulfuric acid and a formic acid in a ratio of 1:4 and left for 1 to 5 minutes, preferably, at a temperature of 30°C - 70°C to destroy an oxide film, and then a surface treatment may proceed.

The metal alloy is processed for about 1 minute to 5 minutes at a temperature of 40°C - 70°C using, preferably, a 0.5% - 3% sulfuric acid aqueous solution and a 2% - 10% formic acid and cleansed using tap water to remove the mixed liquid, and then is dried within a short time.

When a resin material is injected in a state where the metal alloy has been processed in a time less than 1 minute in the above-described main treatment step, the resin material exhibits a low tensile force in relation to a composite structure which is different from that obtained when the is properly processed. When the resin material is injected in a state where the metal alloy is excessively processed for 5 minutes or more, the thickness of the composite structure itself may be reduced to be rapidly deteriorated although there is no substantial change in tensile force.

According to an observation of the surface of each aluminum alloy obtained through the above-described etching step using an electronic microscope, the average inner diameter (hole size) of 1 µm - 10 µm was observed. As a result of measuring the surface roughness of each alloy, the average surface roughness (Rms) of the surface of each alloy covered with fine undercuts was 80 µm - 150 µm.

Such numerical roughness values will generate a very strong bonding force due to an anchor effect by the countless undercuts when the ceramic resin and the aluminum alloy are bonded to each other. At this time, when the hole size is 1 µm or less, the bonding force is reduced due to a poor anchor effect, and when the size is 10 µm or more, the strength of the aluminum alloy is reduced. Thus, the etching is preferably performed such that the hole sizes are in the range of 1 µm - 10 µm.

### [Ceramic Resin Manufacturing Step]

Meanwhile, the ceramic resin material includes 31 wt% - 79 wt% of at least one resin selected from polypropylene, polyamide, polyphenylene sulfide, polyacetylene, polycarbonate, polyester, and polyphenylene oxide, 20 - 66 wt% of silicon carbide, and 1 wt% - 3 wt% of an additive with reference to a total 100 wt parts of the ceramic resin material, and has a heat dissipating function.

At this time, when the content of silicon carbide (SiC) is 20 wt% or less, the thermal conductivity of the ceramic resin material, that is, the heat dissipating function may be degraded, and the content is 66 wt% or more, the strength of the ceramic resin material is weak and the ceramic resin material is very fragile and injection-moldability of the ceramic resin material is poor. Accordingly, the content of SiC is preferably in the range of 39 - 46 wt%, and in such a case, the content of the resin is in a range of 51 wt% - 60 wt%, and the content of the additive is in a range of 1 wt% - 3 wt%.

More detailed descriptions will be described below.

As for the resin, most thermoplastic resins may be used besides polypropylene, polyamide, polyphenylene sulfide, polyacetylene, polycarbonate, polyester, and polyphenylene oxide as described above.

The silicon carbide has a compound which has a high covalent bonding property, is very rigid, and has a high decomposition temperature of about 2500°C. Because various types of crystals exist in the silicon carbide, the silicon carbide is chemically stable and excellent in heat resistance, and is used for a polishing member, a fireproof member, a heat exchanger for high temperature, a resistance heat generating member, or the like. The silicon carbide is used, preferably, in a powder form having a size of 1nm - 10nm. When the size is 10nm or more, dispersibility is reduced.

The additive serves to improve the dispersibility of the silicon carbide so as to make up for the performance of the ceramic resin, i.e., rigidity, or to cause the ceramic resin to exhibit a uniform physical property. The additive also serves to improve the performance of the ceramic resin so that the ceramic resin can be rapidly solidified.

An inorganic filler, i.e. a filling agent is an inorganic material used by being mixed in various shapes (e.g., a particle shape, a fiber shape, and a flake shape) to be dispersed in a polymeric material for the purpose of improving a physical property of the polymeric material (*e.g*., strength, elasticity, flexibility, anti-seasonality, residual stress alleviating property, conductivity, or coloring), moldability (*e.g*., fluidity or contractility), economic efficiency (*e.g.*, weight reduction or resource saving), improving a surface with improved rigidity and correcting flexure, or complementing rigidity. The inorganic filler is added by about 25 wt% - 35 wt% with reference to a total 100 wt parts of the additive.

The inorganic filler may include, for example, silica gel, calcium carbonate, and titanium oxide. Without being limited thereto, however, various kinds inorganic fillers may be used, and, for example, carbon fiber, graphite, zinc oxide, alumina, crystalline silica, magnesium oxide, aluminum nitride or boron nitride may be used as a heat conductive filler.

In addition, as an additive for improving a property of a plastic (resin), a plasticizer, a stabilizer, an antistatic agent, a flame retardant material, a filler, a colorant, a foaming agent, a lubricant, a nucleating agent, a curing agent (a crosslinking agent), an ultraviolet absorbing agent, or the like may be additionally added.

A dispersing agent is added so as to prevent flocculation of fine particles produced when large particles and flocculated particles are crushed to produce smaller particles and colloid particles. That is, in order to obtain a uniform physical property, an absorbent material as a surfactant, a polymeric material or the like, or a peptizer may also be used. Such a dispersing agent is added by 35 wt% - 40 wt% with reference to a total 100 wt parts of the additive.

A coagulant (catalyst) is added for increasing a solidifying rate of a material which is cooled slowly, and carbon black is most frequently used as for the coagulant. Such a coagulant is added by 30 wt% - 35 wt% with reference total 100 wt parts of the additive.

The ceramic resin formed using the components as described above is improved in thermal conductivity to have the heat dissipating function when silicon carbide is added thereto.

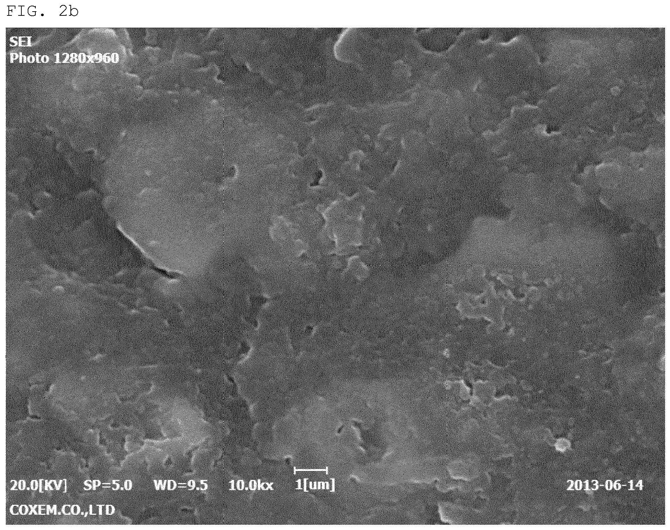

In addition, the ceramic resin has a surface as illustrated in FIGs. 2a and 2b.

As an example, a metal alloy-and-ceramic resin composite was obtained by injection molding, in a die, a ceramic resin material including 51 wt% of at least one resin selected from polypropylene, polyamide, polyphenylene sulfide, polyacetylene, polycarbonate, polyester, and polyphenylene oxide, 46 wt% of silicon carbide, and 3 wt% of an additive, with reference to a total 100 wt parts of the resin material.
Such a ceramic resin material exhibited physical properties indicated in Table 1 below.

**Table 1**

| Item | Unit | Test Method | Numerical Value |
|---|---|---|---|
| Tensile Force | kg / cm² | ASTM | 625.3 |
| Tensile Modulus | kg / cm² | ASTM | 59563.8 |
| Flexural Strength | kg / cm² | ASTM | 420 |
| Flexural Elongation | % | ASTM | 0.741 |
| Impact Strength 23°C -20°C -40°C | kg-cm/cm | ASTM | 1.787 |
| | | ASTM | - |
| | | ASTM | - |
| Thermal Deformation Temperature | °C4.6kg/cm² | ASTM | 265 |
| Fluidity Index | g/10min (250°C/2 .1 6kg) | ASTM | ∼12 |
| Hardness | Rockwell R M Shor A D | ASTM | ∼77 |
| Contraction Rate | cm/cm | ASTM | 1.0 - 1.3% |
| Specific Gravity | g/cm³ | ASTM | ∼1.78 |
| Ash | % | ASTM | ∼46 |
| Flammability | | ASTM | UL-94 V-0 |
| Thermal Conductivity | W/mk | ASTM | 4.2 - 4.5 |

As another example, a metal alloy-and-ceramic resin composite was obtained by injection molding, in a die, a ceramic resin material including 58 wt% of at least one resin selected from polypropylene, polyamide, polyphenylene sulfide, polyacetylene, polycarbonate, polyester, and polyphenylene oxide, 39 wt% of silicon carbide, and 3 wt% of an additive, with reference to a total 100 wt parts of the resin material.

Such a ceramic resin material exhibited physical properties indicated in Table 2 below.

**Table 2**

| Item | Unit | Test Method | Numerical Value |
|---|---|---|---|
| Tensile Force | kg /cm² | ASTM | 1011 |
| Tensile Modulus | kg /cm² | ASTM | 109806 |
| Flexural Strength | kg /cm² | ASTM | 7000 |
| Flexural Elongation | % | ASTM | 1.0-1.3 |
| Impact Strength 23°C -20°C -40°C | kg-cm/cm | ASTM | 1.8 |
| | | ASTM | - |
| | | ASTM | - |
| Thermal Deformation Temperature | °C4.6kg/cm² | ASTM | |
| Fluidity Index | g/10min (250°C/2.16kg) | ASTM | ∼12 |
| Hardness | Rockwell R | ASTM | - |
| | M | | |
| | Shor A | | - |
| | D | | |
| Contraction Rate | Cm/cm | ASTM | - |
| Specific Gravity | g/cm³ | ASTM | ∼1.9 |
| Ash | % | ASTM | ∼39 |
| Flammability | | ASTM | UL-94 V-0 |
| Thermal Conductivity | W/mk | ASTM | 1.5-1.8 |

As may be confirmed from each of the examples represented above, when the content of silicon carbide is low, that is, when silicon carbide is added by 35 wt% or less, the thermal conductivity is considerably reduced, and when silicon carbide is added by 50 wt% or more, the strength of the material (resin) is weak and thus, the material is fragile and degraded in injection moldability. Accordingly, it is preferable that silicon carbide is added in a range of 35 wt% - 50 wt%.

### [Bonding Step]

When an aluminum alloy material and a ceramic resin are manufactured through the above-described processes, a bonding step is performed. That is, an injection molding die is prepared, an upper die (moving die) is opened, a component structure made of the processed metal alloy is introduced into a lower die (fixed die), and the upper die is closed.

Next, when the ceramic resin material is injected in the above-described die, the metal alloy and the ceramic resin material which are heterogeneous materials are bonded to each other so that an integrated composite structure can be obtained.

Injection molding conditions of a thermoplastic synthetic resin composition include a die temperature and an injection temperature, and the injection molding is adapted to be performed using temperatures applied when injection-molding a conventional resin material. That is, although a good result may be obtained when the die temperature and the injection temperature are high, the best bonding effect can be obtained when the temperature of a metal alloy is 100°C or higher which is higher than the temperature applied when the thermoplastic synthetic resin composition is used without increasing the temperature excessively. When the temperature of an alloy product rather than a practical die temperature, for example, the temperature of a magnesium alloy product is 100°C or higher, the best bonding effect can be obtained.

The temperature of the upper and lower dies may be low as long as the temperature of a designed product can be increased. When the product is thick or large, an injection standby time may be adjusted. Accordingly, the injection molding die should be manufactured in consideration of the fact that it may be used at such a high temperature.

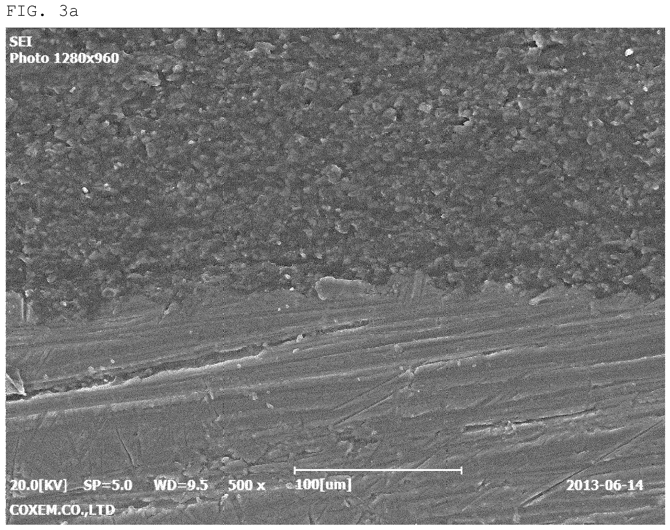

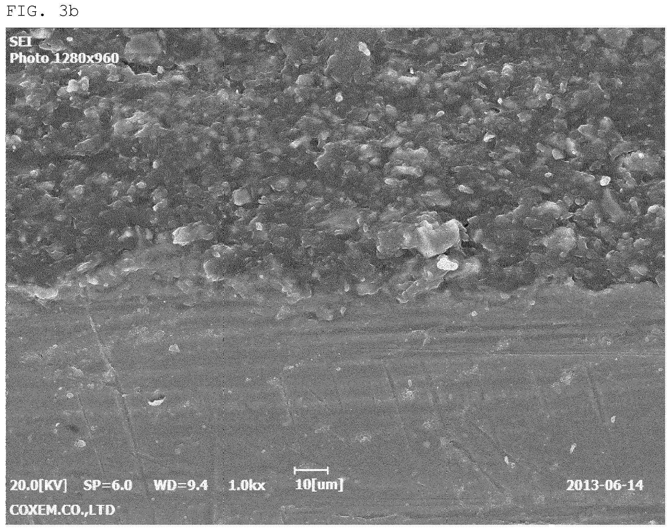

The bonding surfaces of the metal alloy (aluminum alloy) and the ceramic resin which are bonded through the above-described process have a compact bonding structure as illustrated in FIGs. 3a and 3b.

### [Example 1]

A metal alloy-and-ceramic resin composite was obtained in which the metal alloy-and-ceramic resin composite included: a metal alloy having a piece shape having a predetermined thickness, width and length, in which recess and protrusion undercuts were formed to provide an average surface roughness of 80 µm to 150 µm by degreasing a surface thereof using a surfactant, and etching the degreased surface using an aqueous solution of at least one acid selected from hydrochloric acid, sulfuric acid, nitric acid, and formic acid; and a ceramic resin including 51 wt% or more of at least one resin selected from polypropylene, polyamide, polyphenylene sulfide, polyacetylene, polycarbonate, polyester, and polyphenylene oxide, 46 wt% of silicon carbide, and 3 wt% of an additive, with reference to a total 100 wt parts of the resin. The ceramic resin was injection-molded using a die.

Shearing fracture forces were measured for 10 specimens of the metal alloy-and-ceramic resin obtained through the above-described procedure, through a fracture test. As a result, an average shearing fracture force of 150kgf/cm² was measured.

### [Example 2]

A metal alloy-and-ceramic resin composite was obtained in which the metal alloy-and-ceramic resin composite included: a metal alloy having a piece shape having a predetermined thickness, width and length, in which recess and protrusion undercuts were formed to provide an average surface roughness of 80 µm to 150 µm by degreasing a surface thereof using a surfactant, and etching the degreased surface using an aqueous solution of at least one acid selected from hydrochloric acid, sulfuric acid, nitric acid, and formic acid; and a ceramic resin including 58 wt% or more of at least one resin selected from polypropylene, polyamide, polyphenylene sulfide, polyacetylene, polycarbonate, polyester, and polyphenylene oxide, 39 wt% of silicon carbide, and 3 wt% of an additive, with reference to a total 100 wt parts of the resin. The ceramic resin was injection-molded using a die.

Shearing fracture forces were measured for 10 specimens of the metal alloy-and-ceramic resin obtained through the above-described procedure, through a fracture test. As a result, an average shearing fracture force of 200 kgf/cm² was measured.

As may be confirmed from the examples described above, the ceramic resin in which 39 wt% of silicon carbide was added exhibited a high strength (shearing fracture force), but the bonding surface with the metal alloy was separated. The ceramic resin in which 46 wt% of silicon carbide was added exhibited a shearing fracture force which is lower than that of the ceramic resin in which 39 wt% of silicon carbide was added, but the bonding surface was not separated and the ceramic resin itself was fractured.

Through such exemplary embodiments, it can be seen that when the content of the silicon carbide added to the ceramic resin is 35 wt% or less, the strength is high but the bonding surface is easily separated and the thermal conductivity is low. When the content of silicon carbide added to the ceramic resin is 46 wt% or more, the strength is lower than that of the ceramic resin in which the content of silicon carbide added to the ceramic resin is 35 wt% or less, but the bonding surface is strong and the thermal conductivity is high.

Accordingly, the ceramic resin applied to the metal alloy-and-ceramic resin composite according to the present invention includes silicon carbide added in a range of 35 wt% - 50 wt%, preferably in a range of 39 wt% - 46 wt%.

### Industrial Applicability

According to a metal alloy-and-ceramic resin composite and a manufacturing method of the same of the present invention, the metal alloy-and-ceramic resin composite formed by integrally forming a ceramic resin having a heat dissipating function and a metal alloy with each other can be usefully utilized in LED lighting apparatuses, as well as in various electronic devices, home appliances, medical devices, vehicle structure components, vehicle-mounted components, building material components, and other structure components, and exterior components. In view of this fact, the present invention oversteps the limitation of the existing technologies and thus, the present invention may be used in related technologies. In addition, there is a good chance that apparatuses to which the present invention is applied may be placed on the market or sold. Further, it is evident that the present invention can be practically carried out. Thus, the present invention is industrially applicable.

## Claims

1. A metal alloy-and-ceramic resin composite comprising:
a metal alloy, in which recess and protrusion undercuts are formed to provide an average surface roughness Rms of 80 µm to 150 µm by degreasing a surface thereof using a surfactant, and etching the degreased surface using an aqueous solution of at least one acid selected from hydrochloric acid, sulfuric acid, nitric acid, and formic acid; and
a ceramic resin including 31 wt% to 79 wt% of at least one resin selected from polypropylene, polyamide, polyphenylene sulfide, polyacetylene, polycarbonate, polyester, and polyphenylene oxide, 20 wt% to 60 wt% of silicon carbide, and 1 wt% to 3 wt% of an additive, with reference to a total 100 wt parts of the resin,
wherein the ceramic resin is integrated on the surface of the metal alloy which is formed with the recess and protrusion undercuts, through injection molding.

2. The composite as claimed in claim 1, wherein the silicon carbide is used in a form of powder having a size of 1 nm to 10 nm.

3. The composite as claimed in claim 1, wherein the additive includes 25 wt% to 35 wt% of an inorganic filler, 35 wt% to 40 wt% of a dispersing agent, and 30 wt% to 35 wt% of a curing agent, with reference to a total 100 wt parts of the additive.

4. The composite as claimed in claim 1, wherein the metal alloy is selected from an aluminum alloy, a magnesium alloy, and a stainless steel alloy.

5. A method of manufacturing a metal alloy-and-ceramic resin composite according to claims 1-4, the method comprising:
a) a degreasing step of removing an oil component from a surface of a metal alloy using a surfactant;
b) an undercut forming step of removing an oxide film from the degreased surface of the metal alloy, and forming recesses and protrusion undercuts to provide an average surface roughness Rms of 80 µm to 150 µm by etching the surface of the metal alloy, from which the oxide film is removed, using an aqueous solution of at least one acid selected from hydrochloric acid, sulfuric acid, nitric acid, and formic acid;
c) a ceramic resin manufacturing step of manufacturing a ceramic resin including a resin and silicon carbide; and
d) a bonding step of introducing the metal alloy, of which the surface is formed with the undercuts through the undercut forming step, into an injection molding mold, and then injection molding and bonding the ceramic resin manufactured in the ceramic resin manufacturing step on the surface of the metal alloy.

6. The method as claimed in claim 5, wherein a ceramic resin is obtained through d) the ceramic resin manufacturing step, and the ceramic resin includes 31 wt% to 79 wt% of at least one resin selected from polypropylene, polyamide, polyphenylene sulfide, polyacetylene, polycarbonate, polyester, and polyphenylene oxide, 20 wt% to 60 wt% of silicon carbide, and 1 wt% to 3 wt% of an additive, with reference to a total 100 wt parts of the resin.

7. The method as claimed in claim 6, wherein, the additive includes 25 wt% to 35 wt% of an inorganic filler, 35 wt% to 40 wt% of a dispersing agent, and 30 wt% to 35 wt% of a curing agent, with reference to a total 100 wt parts of the additive.

8. The method as claimed in claim 5, wherein the metal alloy is selected from an aluminum alloy, a magnesium alloy, and a stainless steel alloy.

9. The method as claimed in claim 6, wherein the silicon carbide is used in a form of powder having a size of 1 nm to 10 nm.

## Patentansprüche

1. Metalllegierung-Keramikharz-Verbund, umfassend:
eine Metalllegierung, in der Vertiefungs- und Vorsprungs-Hinterschnitte gebildet sind, was eine mittlere Oberflächenrauigkeit Rms von 80 µm bis 150 µm ergibt, indem man eine Oberfläche davon mit Hilfe eines Tensids entfettet und die entfettete Oberfläche unter Verwendung einer wässrigen Lösung wenigstens einer Säure, die aus Chlorwasserstoffsäure, Schwefelsäure, Salpetersäure und Ameisensäure ausgewählt ist, ätzt; und
ein Keramikharz, das 31 Gew.-% bis 79 Gew.-% wenigstens eines Harzes, das aus Polypropylen, Polyamid, Polyphenylensulfid, Polyacetylen, Polycarbonat, Polyester und Polyphenylenoxid ausgewählt ist, 20 Gew.-% bis 60 Gew.-% Siliciumcarbid und 1 Gew.-% bis 3 Gew.-% eines Additivs umfasst, bezogen auf insgesamt 100 Gewichtsteile des Harzes;
wobei das Keramikharz auf der Oberfläche der Metalllegierung, die mit den Vertiefungs- und Vorsprungs-Hinterschnitten geformt ist, durch Spritzguss integriert ist.

2. Verbund gemäß Anspruch 1, wobei das Siliciumcarbid in Pulverform mit einer Größe von 1 nm bis 10 nm verwendet wird.

3. Verbund gemäß Anspruch 1, wobei das Additiv 25 Gew.-% bis 35 Gew.-% eines anorganischen Füllstoffs, 35 Gew.-% bis 40 Gew.-% eines Dispersionsmittels und 30 Gew.-% bis 35 Gew.-% eines Härtungsmittels umfasst, bezogen auf insgesamt 100 Gewichtsteile des Additivs.

4. Verbund gemäß Anspruch 1, wobei die Metalllegierung aus einer Aluminiumlegierung, einer Magnesiumlegierung und einer Edelstahllegierung ausgewählt ist.

5. Verfahren zur Herstellung eines Metalllegierung-Keramikharz-Verbunds gemäß den Ansprüchen 1 bis 4, wobei das Verfahren umfasst:
a) einen Entfettungsschritt zur Entfernung einer Ölkomponente von einer Oberfläche einer Metalllegierung unter Verwendung eines Tensids;
b) einen Hinterschnittbildungsschritt zur Entfernung einer Oxidschicht von der entfetteten Oberfläche der Metalllegierung und zur Bildung von Vertiefungs- und Vorsprungs-Hinterschnitten, was eine mittlere Oberflächenrauigkeit Rms von 80 µm bis 150 µm ergibt, und zwar durch Ätzen der Oberfläche der Metalllegierung, von der die Oxidschicht entfernt ist, unter Verwendung einer wässrigen Lösung wenigstens einer Säure, die aus Chlorwasserstoffsäure, Schwefelsäure, Salpetersäure und Ameisensäure ausgewählt ist;
c) einen Keramikharzherstellungsschritt zur Herstellung eines Keramikharzes, das ein Harz und Siliciumcarbid umfasst; und
d) einen Bindungsschritt zur Einführung der Metalllegierung, deren Oberfläche durch den Hinterschnittbildungsschritt mit den Hinterschnitten geformt ist, in eine Spritzgussform und dann Spritzgießen und Binden des im Keramikharzherstellungsschritt hergestellten Keramikharzes auf die Oberfläche der Metalllegierung.

6. Verfahren gemäß Anspruch 5, wobei ein Keramikharz durch d) den Keramikharzherstellungsschritt erhalten wird und das Keramikharz 31 Gew.-% bis 79 Gew.-% wenigstens eines Harzes, das aus Polypropylen, Polyamid, Polyphenylensulfid, Polyacetylen, Polycarbonat, Polyester und Polyphenylenoxid ausgewählt ist, 20 Gew.-% bis 60 Gew.-% Siliciumcarbid und 1 Gew.-% bis 3 Gew.-% eines Additivs umfasst, bezogen auf insgesamt 100 Gewichtsteile des Harzes.

7. Verfahren gemäß Anspruch 6, wobei das Additiv 25 Gew.-% bis 35 Gew.-% eines anorganischen Füllstoffs, 35 Gew.-% bis 40 Gew.-% eines Dispersionsmittels und 30 Gew.-% bis 35 Gew.-% eines Härtungsmittels umfasst, bezogen auf insgesamt 100 Gewichtsteile des Additivs.

8. Verfahren gemäß Anspruch 5, wobei die Metalllegierung aus einer Aluminiumlegierung, einer Magnesiumlegierung und einer Edelstahllegierung ausgewählt ist.

9. Verfahren gemäß Anspruch 6, wobei das Siliciumcarbid in Pulverform mit einer Größe von 1 nm bis 10 nm verwendet wird.

## Revendications

1. Composite alliage métallique et résine céramique comprenant :
un alliage métallique, dans lequel des entailles en évidement et protubérance sont formées pour assurer une rugosité de surface moyenne Rms de 80 µm à 150 µm en dégraissant une surface à l'aide d'un tensioactif, et en gravant la surface dégraissée à l'aide d'une solution aqueuse d'au moins un acide choisi parmi l'acide chlorhydrique, l'acide sulfurique, l'acide nitrique, et l'acide formique ; et
une résine céramique incluant 31 % en poids à 79 % en poids d'au moins une résine choisie parmi le polypropylène, le polyamide, le poly(sulfure de phénylène), le polyacétylène, le polycarbonate, le polyester, et le poly(oxyde de phénylène), 20 % en poids à 60 % en poids de carbure de silicium, et 1 % en poids à 3 % en poids d'un additif, rapporté à un total de 100 parties en poids de la résine,
dans lequel la résine céramique est intégrée sur la surface de l'alliage métallique qui est formée avec les entailles en évidement et protubérance, par moulage par injection.

2. Composite selon la revendication 1, dans lequel le carbure de silicium est utilisé sous une forme de poudre ayant une taille de 1 nm à 10 nm.

3. Composite selon la revendication 1, dans lequel l'additif inclut 25 % en poids à 35 % en poids d'une charge inorganique, 35 % en poids à 40 % en poids d'un agent dispersant, et 30 % en poids à 35 % en poids d'un agent durcisseur, rapporté à un total de 100 parties en poids de l'additif.

4. Composite selon la revendication 1, dans lequel l'alliage métallique est choisi parmi un alliage d'aluminium, un alliage de magnésium, et un alliage d'acier inoxydable.

5. Procédé de fabrication d'un composite alliage métallique et résine céramique selon les revendications 1 à 4, le procédé comprenant :
a) une étape de dégraissage consistant à éliminer un composant huileux d'une surface de l'alliage métallique à l'aide d'un tensioactif ;
b) une étape de formation d'entaille consistant à éliminer un film d'oxyde de la surface dégraissée de l'alliage métallique, et à former des entailles en évidement et protubérance pour assurer une rugosité de surface moyenne Rms de 80 µm à 150 µm par gravure de la surface de l'alliage métallique, de laquelle le film d'oxyde est éliminé, à l'aide d'une solution aqueuse d'au moins un acide choisi parmi l'acide chlorhydrique, l'acide sulfurique, l'acide nitrique, et l'acide formique ;
c) une étape de fabrication de résine céramique consistant à fabriquer une résine céramique incluant une résine et du carbure de silicium ; et
d) une étape de liaison consistant à introduire l'alliage métallique, dont la surface est formée avec les entailles par le biais de l'étape de formation d'entaille, dans un moule de moulage par injection, puis le moulage par injection et la liaison de la résine céramique fabriquée dans l'étape de fabrication de résine céramique sur la surface de l'alliage métallique.

6. Procédé selon la revendication 5, dans lequel une résine céramique est obtenue par d) l'étape de fabrication de résine céramique, et la résine céramique inclut 31 % en poids à 79 % en poids d'au moins une résine choisie parmi le polypropylène, le polyamide, le poly(sulfure de phénylène), le polyacétylène, le polycarbonate, le polyester, et le poly(oxyde de phénylène), 20 % en poids à 60 % en poids de carbure de silicium, et 1 % en poids à 3 % en poids d'un additif, rapporté à un total de 100 parties en poids de la résine.

7. Procédé selon la revendication 6, dans lequel, l'additif inclut 25 % en poids à 35 % en poids d'une charge inorganique, 35 % en poids à 40 % en poids d'un agent dispersant, et 30 % en poids à 35 % en poids d'un agent durcisseur, rapporté à un total de 100 parties en poids de l'additif.

8. Procédé selon la revendication 5, dans lequel l'alliage métallique est choisi parmi un alliage d'aluminium, un alliage de magnésium, et un alliage d'acier inoxydable.

9. Procédé selon la revendication 6, dans lequel le carbure de silicium est utilisé sous une forme de poudre ayant une taille de 1 nm à 10 nm.
